# FASCICULE DE BREVET EUROPEEN

(11) **EP 2 627 549 B1**
(45) Date de publication et mention de la délivrance du brevet: **20.09.2017**
(21) Numéro de dépôt: 11773747.8
(22) Date de dépôt: 23.09.2011
(51) Int. Cl.: B62B 3/02, B05B 1/00

(54) **DISPOSITIF DE PLIAGE DE ROUES ADAPTE A UN CHARIOT D'EMBARQUEMENT DE CHARGE**
RADFALTVORRICHTUNG FÜR EINEN WAGEN ZUM VERLADEN EINER LADUNG
WHEEL FOLDING DEVICE SUITABLE FOR A CARRIAGE FOR LOADING FREIGHT

(30) Priorité: 12.10.2010 FR 1058257
(43) Date de publication de la demande: 21.08.2013
(73) Titulaire: PSA Automobiles SA, 78300 Poissy (FR)
(72) Inventeur: HERBAULT, Patrick, F-92250 La Garenne Colombes (FR)
(74) Mandataire: Ménès, Catherine
(86) Numéro de dépôt international: PCT/FR2011/052204
(87) Numéro de publication internationale: WO 2012/049391

(56) Documents cités:
- WO-A1-2004/014667
- FR-A1- 2 698 063
- JP-U- 52 119 662
- US-B1- 6 386 558

## Description

L'invention concerne un dispositif de pliage de roues adapté à un chariot d'embarquement de charge.

L'invention concerne également un chariot d'embarquement de charge comportant un tel dispositif.

Un chariot d'embarquement de charge définit de manière générale tout engin destiné à transporter une charge, le transport étant réalisé par l'avancement de l'engin au moyen de roues solidaires de l'engin et en contact avec le sol lors du transport de charge.

Un chariot d'embarquement de charge peut ainsi prendre différentes formes connues : un chariot de supermarché comportant le plus souvent quatre roues, un engin de manutention à trois ou quatre roues, ou une poussette à trois ou quatre roues.

Le pliage d'un chariot se heurte souvent à la question de l'encombrement des roues lorsque le chariot est plié.

On distingue deux types de pliage : un pliage réduisant la largeur du chariot et un pliage conservant la largeur du chariot.

Dans un pliage réduisant la largeur du chariot, les roues n'ont pas forcément besoin d'être repliées puisque l'optimisation de l'encombrement est réalisée par la réduction de la largeur.

En revanche, dans un pliage ne réduisant pas la largeur du chariot, l'encombrement des roues lorsque le chariot est plié doit être considéré.

A cet effet, on peut prévoir des roues démontables ce qui engendre un problème de stockage de ces roues démontées, ne résout pas le problème de l'encombrement associé à ces roues lorsque le chariot est plié, et nécessite un système de démontage supplémentaire.

On peut également prévoir de réduire le diamètre des roues, mais ce diamètre ne peut être réduit que jusqu'à une limite de diamètre de 10 à 20cm de roues en deçà de laquelle le chariot n'est plus aisément manoeuvrable.

On connaît de la publication US2010/0140889 un système de pliage des roues d'un chariot. Ce système consiste à appliquer une force de poussée sur la barre de manoeuvre afin de faire passer les roues d'une position déployée de fonctionnement à une position repliée sous le chariot et à appliquer une force de traction sur la même barre de manoeuvre pour faire passer les roues de la position repliée à la position déployée. Mais ce système est difficilement manoeuvrable lorsque l'on cherche réaliser l'opération de pliage des roues en charge, c'est-à-dire sans à soulever le chariot, même temporairement, pendant cette opération, puisque la force de frottement des roues en contact avec le sol s'oppose à ce pliage.

Or il est essentiel que le pliage et le déploiement des roues s'effectue sans risque physiologique pour l'utilisateur et qu'ainsi ces opérations de pliage et de dépliage soient effectuées exclusivement sans avoir à soulever le chariot.

On connait également du document FR2698063-A1, un chariot conforme au préambule de la revendication 1.

Cependant, dans ce document, le positionnement des roues reste en retrait par rapport aux extrémités latérales du chariot.

La présente invention a pour but de pallier cet inconvénient en offrant un agencement de chariot qui une fois déployé, présente des roues disposées le plus à l'extérieur possible du chariot et qui une fois plié, présente une plus grande compacité par rapport à la largeur de voie entre les deux roues déployées. Pour une largeur donnée du chariot, la largeur de voie est portée au maximum apportant stabilité et sécurité pour la conduite du chariot (augmentation du polygone de sustentation liée à la voie par rapport à la charge supposée lourde transportée)

A cet effet, l'invention a pour objet un chariot conforme à la partie caractérisante de la revendication 1.

Le dispositif de l'invention peut également comporter les caractéristiques optionnelles suivantes considérées isolément ou selon toutes les combinaisons techniques possibles :
- des moyens de maintien d'au moins un point de contact des roues avec le sol au cours du passage des roues d'une position repliée sous le chariot à une position déployée de fonctionnement, et vice versa.
- la première extrémité des biellettes peut être située vers l'extérieur du chariot relativement aux roues considérées dans leur position repliée sous le chariot.
- les moyens de déplacement linéaire du point de déplacement linéaire du support de roues associé assurent un déplacement linéaire de ce point de déplacement linéaire parallèlement au sol, et le point de déplacement linéaire du support de roues associé est situé au niveau de l'extrémité supérieur du dit support de roues considéré lorsque la roue correspondante est en position déployée de fonctionnement.
- le point de déplacement linéaire du support de roues associé est décalé d'une part verticalement vers le sol de l'axe parallèle au sol passant par le premier axe de rotation de la biellette correspondante, et d'autre part horizontalement vers l'intérieur du chariot du plan de rotation de la roue correspondante lorsque la dite roue est considérée dans une position autre que la position repliée sous le chariot.
- les moyens de déplacement linéaire du point de déplacement linéaire du support de roues associé comportent au moins un rail de guidage réalisé sur le chariot et des moyens de guidages associés.
- au moins une roue du chariot est une roue omnidirectionnelle à galets pour laquelle la bande de roulement comporte au moins une rangée de rouleaux dont l'axe de rotation est dans le plan de rotation de la dite roue.

L'invention porte également sur un chariot comportant un dispositif tel que décrit précédemment.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique de face du cadre inférieur du chariot comportant le dispositif de pliage de roues de l'invention selon une première variante, les roues étant en position repliée sous le chariot,
- la figure 2 est la même représentation schématique que celle de la figure 1 sur laquelle les roues sont dans une position intermédiaire entre la position repliée sous le chariot et la position déployée de fonctionnement,
- la figure 3 est la même représentation schématique que celle de la figure 1 sur laquelle les roues sont en position déployée de fonctionnement,
- la figure 4 est une représentation schématique en perspective en élévation de la figure 3,
- la figure 5 est une représentation schématique de face du cadre inférieur du chariot comportant le dispositif de pliage de roues de l'invention selon une deuxième variante, les roues étant en position repliée sous le chariot,
- la figure 6 est la même représentation schématique que celle de la figure 5 sur laquelle les roues sont dans une position intermédiaire entre la position repliée sous le chariot et la position déployée de fonctionnement,
- la figure 7 est la même représentation schématique que celle de la figure 5 sur laquelle les roues sont en position déployée de fonctionnement,
- la figure 8 est une représentation schématique en perspective en élévation de la figure 7,
- la figure 9 est une représentation schématique du passage d'une roue de la position reliée sous le chariot à la position déployée de fonctionnement lorsque la zone de la roue en contact avec le sol a un profil triangulaire,
- la figure 10 est une représentation schématique du passage d'une roue de la position reliée sous le chariot à la position déployée de fonctionnement lorsque la zone de la roue en contact avec le sol à un profil carré à coin angulaire,
- la figure 11 est une représentation schématique du passage d'une roue de la position reliée sous le chariot à la position déployée de fonctionnement lorsque la zone de la roue en contact avec le sol à un profil carré à coin arrondi,
- la figure 12 est une représentation schématique du passage d'une roue de la position reliée sous le chariot à la position déployée de fonctionnement lorsque la zone de la roue en contact avec le sol à un profil rond,
- la figure 13 est une représentation schématique du dispositif de l'invention lorsque la zone de la roue en contact avec le sol à un profil rond, et que la roue est dans une position intermédiaire entre la position repliée sous le chariot et déployée de fonctionnement,
- la figure 14 est une représentation schématique du dispositif de l'invention lorsque la zone de la roue en contact avec le sol à un profil rond, et que la roue est dans une position repliée sous le chariot,
- la figure 15 est la même représentation schématique que celle de la figure 14 sur laquelle la roue est dans une première position intermédiaire entre la position repliée sous le chariot et la position déployée de fonctionnement,
- la figure 16 est la même représentation schématique que celle de la figure 14 sur laquelle la roue est dans une deuxième position intermédiaire entre la position repliée sous le chariot et la position déployée de fonctionnement,
- la figure 17 est la même représentation schématique que celle de la figure 14 sur laquelle la roue est dans une troisième position intermédiaire entre la position repliée sous le chariot et la position déployée de fonctionnement,
- la figure 18 est la même représentation schématique que celle de la figure 14 sur laquelle la roue est dans une quatrième position intermédiaire entre la position repliée sous le chariot et la position déployée de fonctionnement,
- la figure 19 est la même représentation schématique que celle de la figure 14 sur laquelle la roue est en position déployée de fonctionnement,
- la figure 20 est une représentation schématique de face du système de déplacement linéaire du point de déplacement du support de roues selon une première variante,
- la figure 21 est une représentation schématique de face du système de déplacement linéaire du point de déplacement du support de roues selon une deuxième variante,
- la figure 22 est une représentation schématique de face du système de déplacement linéaire du point de déplacement du support de roues selon une troisième variante,
- la figure 23 est une représentation schématique de face du système de déplacement linéaire du point de déplacement du support de roues selon une quatrième variante,
- la figure 24 est une représentation schématique de face du système de déplacement linéaire du point de déplacement du support de roues selon une cinquième variante,
- la figure 25 est une représentation schématique de face du système de déplacement linéaire du point de déplacement du support de roues selon une sixième variante.

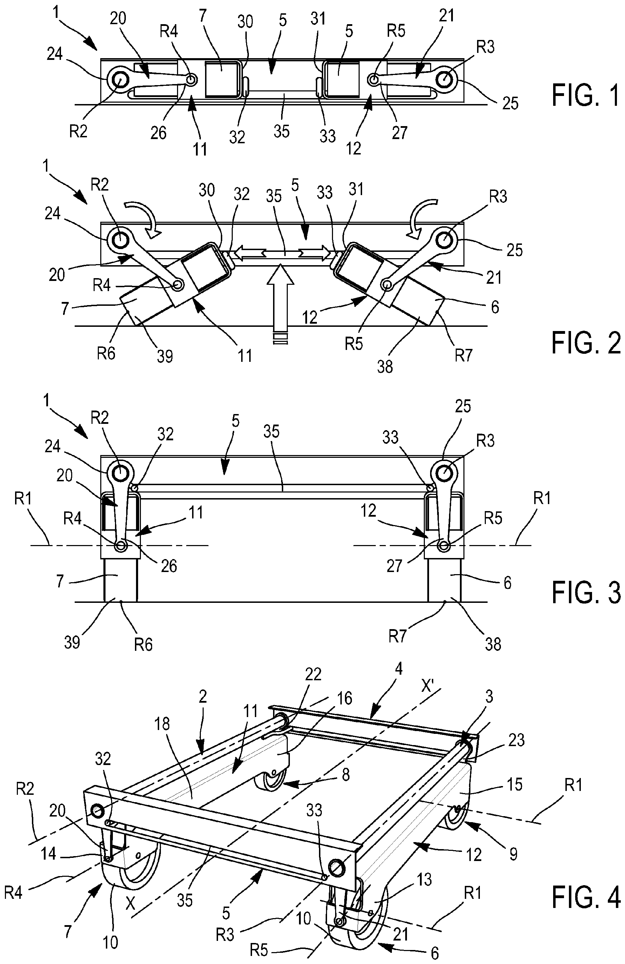

En référence aux figures 1 à 4, le dispositif de l'invention selon la première variante est monté sur le cadre inférieur 1 d'un chariot d'embarquement de charge dont seul le cadre inférieur 1 est représenté. En fonctionnement, le cadre inférieur 1 supporte la charge transportée par le chariot.

Le cadre inférieur 1 s'étend longitudinalement selon un axe principal XX' (figure 4) qui est l'axe principal d'avancement du chariot d'embarquement de charge. Le cadre inférieur 1 comporte deux bords longitudinaux opposés 2,3 et deux bords transversaux opposés 4,5.

Le cadre inférieur 1 comporte quatre roues 6,7,8,9 dont deux roues avant 6,7 et deux roues arrière 8,9. Ces quatre roues 6,7,8,9 correspondent à des roues classiquement utilisées et dont la bande roulement 10 est plane.

Chaque roue arrière 8,9 du cadre inférieur 1 du chariot est reliée à une roue avant 7,6 située dans un plan parallèle à l'axe principal d'avancement XX' au moyen d'un support de roues 11,12.

Chaque premier 11 et deuxième 12 support de roues comporte une partie avant respective 13,14 qui enveloppe en partie la roue avant correspondante 6,7 depuis sa partie supérieure jusqu'à approximativement son axe de rotation R1, une partie arrière respective 15,16 qui enveloppe de la même manière la roue arrière correspondante 8,9 et une partie intermédiaire 17,18 reliant les parties avant 13,14 et arrière 15,16.

Chaque premier 11 et deuxième 12 support de roues maintient ainsi fixement les roues avant 6,7 et les roues arrière 8,9 dans une direction parallèle à l'axe d'avancement XX' du chariot tout en permettant à chacune de ces roues 6,7,8,9 de tourner autour de leur axe de rotation propre R1.

Par ailleurs, chaque premier 11 et deuxième 12 support de roues est solidarisé au chariot au moyen de deux biellettes respectives 20,21,22,23. Plus précisément, chaque premier 11 et deuxième 12 support de roues comporte une biellette avant 20,21 située au niveau de la roue avant correspondante 6,7 et une biellette arrière 22,23 située au niveau de la roue arrière correspondante 8,9.

En référence aux figures 1 à 3, on décrira la structure et le fonctionnement des biellettes avant 20,21, qui s'appliquent de façon correspondantes aux biellettes arrières 22,23.

Chaque biellette avant 20,21 comporte une première extrémité respective 24,25 qui est reliée au cadre inférieur 1 du chariot en étant monté rotatif relativement à ce cadre inférieur 1 autour d'un premier axe de rotation R2,R3.

Comme visible sur la figure 4, ces premiers axes de rotation R2,R3 sont confondus avec les bords longitudinaux opposés 2,3 du cadre inférieur 1 du chariot de sorte que ces premiers axes de rotation R2,R3, et donc la première extrémité 24,25 de la biellette avant correspondante 20,21, soit situés vers l'extérieur du chariot lors les roues 6,7 sont considérées dans leur position repliée sous le chariot (figure 1).

Chaque biellette avant 20,21 comporte une deuxième extrémité respective 26,27 qui est reliée au support de roues le plus proche 11,12 en étant monté rotatif relativement à ce support de roues 11,12 autour d'un deuxième axe de rotation R4,R5.

Comme illustré sur la figure 3, le deuxième axe de rotation R4,R5 de chacune des biellettes avant 20,21 est situé sur le support de roues correspondant 11,12 à mi-hauteur de la roue 6,7 considérée dans sa position déployée de fonctionnement au niveau de l'axe de rotation R1 de la roue 6,7.

Par ailleurs, l'extrémité supérieure respective 30,31 de chaque premier 11 et deuxième 12 support de roues (figure 2), comporte un point de déplacement linéaire du support 32,33 guidé en translation pendant le pliage l déploiement des roues par un rail de guidage 35 parallèle au sol et réalisé dans la paroi du bord transversal avant 5.

Le passage des roues de leur position repliée sous le chariot (figure 1) à la position déployée de fonctionnement (figure 3) s'effectue, de façon concomitante, par la rotation des biellettes 20,21 autour de leur premier axe de rotation respectif R2,R3 et par le déplacement linéaire du point de déplacement linéaire 32,33 du support de roues correspondant 11,12 qui entraînent, de façon concomitante également, un mouvement principalement de pivotement de la roue concernée 6,7 autour d'un axe de pivotement R6,R7 (figure 2) et le soulèvement du cadre inférieur 1 du chariot.

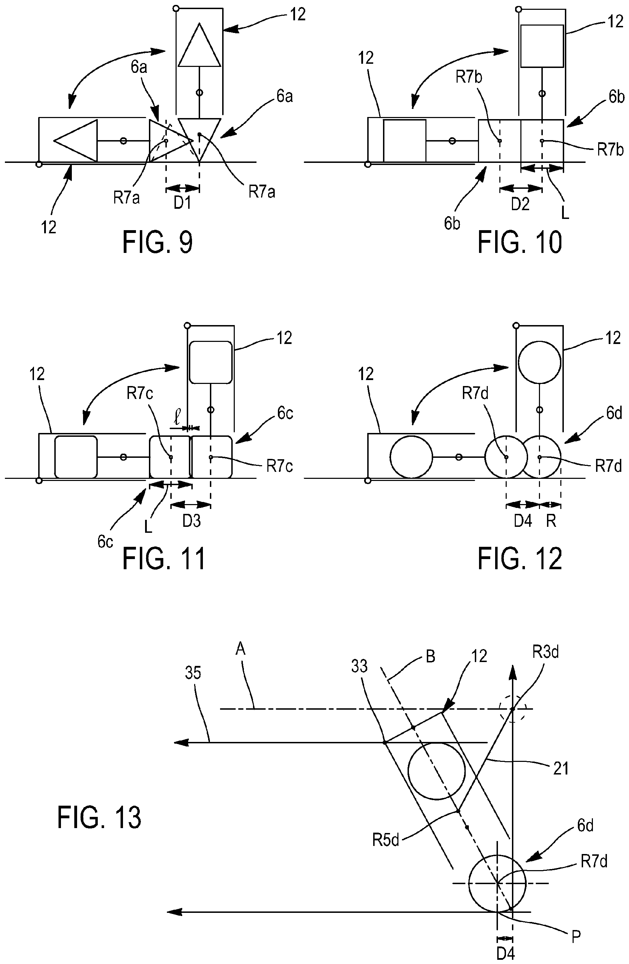

L'axe de pivotement R6,R7 des roues avant 6,7 est situé au niveau de l'extrémité inférieure respective 38,39 de chacune de ces roues avant 6,7 en contact avec le sol en position déployée de fonctionnement. On parle de mouvement principalement de pivotement parce qu'est en fait associé à ce mouvement de pivotement un mouvement sensible de translation qui sera décrit plus loin en référence aux figures 9 à 12.

Enfin, le pivotement de chaque roue 6,7 et le soulèvement du cadre inférieur 1 du chariot sont rendus possible par la rotation de la deuxième extrémité 26,27 de la biellette 20,21 autour du deuxième axe de rotation R4,R5 situé sur le support de roues 11,12.

Le dispositif de l'invention permet ainsi de faire passer les roues 6,7 d'une position repliée sous le chariot à une position déployée de fonctionnement tout en maintenant les roues 6,7 en contact avec le sol par l'association, de façon concomitante, d'un mouvement principalement de pivotement des roues 6,7 autour de l'axe de pivotement correspondant R6,R7 et du déplacement linéaire du point de déplacement linéaire 32,33 de chaque support de roues associé 11,12.

Le passage inverse de la position déployée de fonctionnement à la position repliée sous le chariot s'effectuera également par un mouvement de pivotement général des roues 6,7 autour de l'axe de pivotement correspondant R6,R7 et le déplacement linéaire du point de déplacement linéaire 32,33 de chaque support de roues associé 11,12 dans les sens inverses de ceux décrits en référence aux figures 1 à 4.

Pendant le pliage ou le déploiement des roues, les roues gardent le contact avec le sol ce qui évite à l'utilisateur de soulever même temporairement le chariot pendant ce pliage ou ce déploiement.

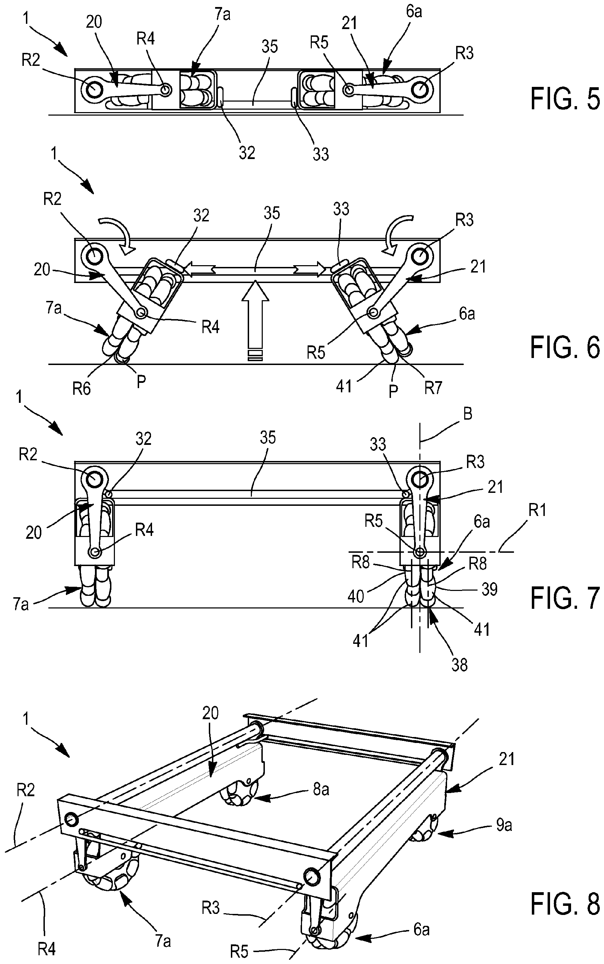

Le dispositif de l'invention, selon la deuxième variante illustrée sur les figures 5 à 8, diffère du dispositif de la première variante uniquement en ce que les roues avant 6a,7a et arrière 8a,9a sont des roues omnidirectionnelles à galets.

En référence à la figure 7, les roues omnidirectionnelles à galets 6a,7a,8a,9a utilisées dans le dispositif de l'invention de la deuxième variante comportent chacune une bande de roulement 38 faite de deux rangées de rouleaux 39,40. Chaque rouleau 41 possède un axe de rotation R8 qui lui est propre et qui se trouve dans le plan de rotation B de la roue concernée 6a et donc parallèle à l'axe principal d'avancement XX' du chariot.

La rotation de chaque rouleau 41 selon son propre axe de rotation R8, la répartition régulière des rouleaux 41 le long de la bande de roulement 38 correspondante et la rotation de chaque roue 6a,7a,8a,9a autour de son axe de rotation R1 permet le déplacement des roues 6a,7a,8a,9a et donc du chariot, selon toutes les directions lorsque les roues sont en position déployée de fonctionnement.

Par ailleurs, la présence des rouleaux facilite le passage des roues depuis la position repliée sous le chariot jusqu'à la position déployée de fonctionnement et vice versa, puisque le point de contact P (figure 6) des roues au sol pendant le fonctionnement du dispositif accompagnera le mouvement général de pivotement de la roue concernée 6a,7a autour de son axe de pivotement R6,R7, du fait de la présence des rouleaux 41 dont l'axe de rotation R8 est parallèle à l'axe de pivotement R6,R7 des roues 6a,7a.

On parle de mouvement principalement de pivotement parce que les roues ne subissent pas uniquement un pivotement mais qu'elles subissent, en plus du pivotement, une légère translation parallèle au sol. On pourrait considérer un mouvement unique de pivotement de la roue si celle-ci était matérialisée par une droite sans épaisseur ni géométrie de profil particulier. Mais chaque roue comporte une certaine épaisseur et un profil particulier.

On se réfère aux figures 9 à 12 pour détailler ce double mouvement de pivotement et de translation subit par la roue lors du pliage et du déploiement de cette roue avec le dispositif de l'invention.

En référence à la figure 9, lorsque la géométrie du profil de la roue 6a est triangulaire, le passage de la position repliée sous le chariot à la position déployée de fonctionnement génère un pivotement de cette roue 6a autour d'un axe de pivotement R7a et une translation D1 de cette roue 6a vers l'extérieur du chariot.

On comprend que ce double mouvement de pivotement et de translation provient du fait qu'au cours du passage de la position repliée sous le chariot à la position déployée de fonctionnement, chaque roue conservera un point de contact sur le sol.

En référence à la figure 10, lorsque la géométrie du profil de la roue 6b est carrée à coin angulaire, le passage de la position repliée sous le chariot à la position déployée de fonctionnement génère un pivotement de cette roue 6b autour d'un axe de pivotement R7b et une translation D2 de cette roue 6b vers l'extérieur du chariot. La longueur de cette translation D2 correspond à la largeur L du carré représentant le profil de la roue 6b.

En référence à la figure 11, lorsque la géométrie du profil de la roue 6c est carrée à coin arrondie, le passage de la position repliée sous le chariot à la position déployée de fonctionnement génère un pivotement de cette roue 6c autour d'un axe de pivotement R7c et une translation D3 de cette roue 6c vers l'extérieur du chariot. La longueur de cette translation D3 correspond à la largeur L du carré représentant le profil de la roue moins une portion l résultant de la forme arrondie des coins du carré matérialisant la roue 6c.

Enfin, en référence à la figure 12, lorsque la géométrie du profil de la roue 6d est ronde, le passage de la position repliée sous le chariot à la position déployée de fonctionnement génère un pivotement de cette roue 6d autour d'un axe de pivotement R7d et une translation D4 de cette roue 6d vers l'extérieur du chariot. La longueur de cette translation D4 correspond à un quart du périmètre du cercle de rayon R soit π/2 x R.

On décrit plus en détail le fonctionnement du dispositif de l'invention et en particulier la position du point de déplacement linéaire 33 du support de roues 12.

Pour cela, en référence avec la figure 13, on retrouve la biellette 21 montée pivotante d'une part autour du premier axe de rotation R3d situé sur le cadre inférieur non représenté du chariot, et d'autre part autour du deuxième axe de rotation R5d situé sur le support de roues 12.

Au cours des opérations de pliage et de déploiement des roues, la roue 6d subit, comme vu précédemment, d'une part un pivotement autour de l'axe de R7d et d'autre part une translation au sol D4 et ce, afin de toujours conserver un point de contact P de la roue 6d sur le sol.

Le point de déplacement linéaire 33 du support de roues 12 est guidé en translation au cours des opérations de pliage et de déploiement par un rail de guidage 35.

Ce point de déplacement linéaire 33 est décalé verticalement de l'axe horizontal A passant par le premier axe de rotation R3d de la biellette 21 et horizontalement du plan de rotation B de la roue 6d qui est confondu avec le plan de symétrie du support de roues 12.

Par ailleurs, on remarquera que le deuxième axe de rotation R5d de la biellette ne se trouve pas exactement au niveau de l'axe de rotation R1 de la roue considérée 6d mais est décalé vers la partie supérieure de la roue.

L'ensemble de ces décalages permettent de tenir compte du déplacement du point de contact P au cours des opérations de pliage et de déploiement en ajustant le dispositif selon l'épaisseur et la géométrie de la roue et en faisant en sorte que le premier axe de rotation R3d de la biellette 21 ne soit pas gêné par les présence du reste du dispositif.

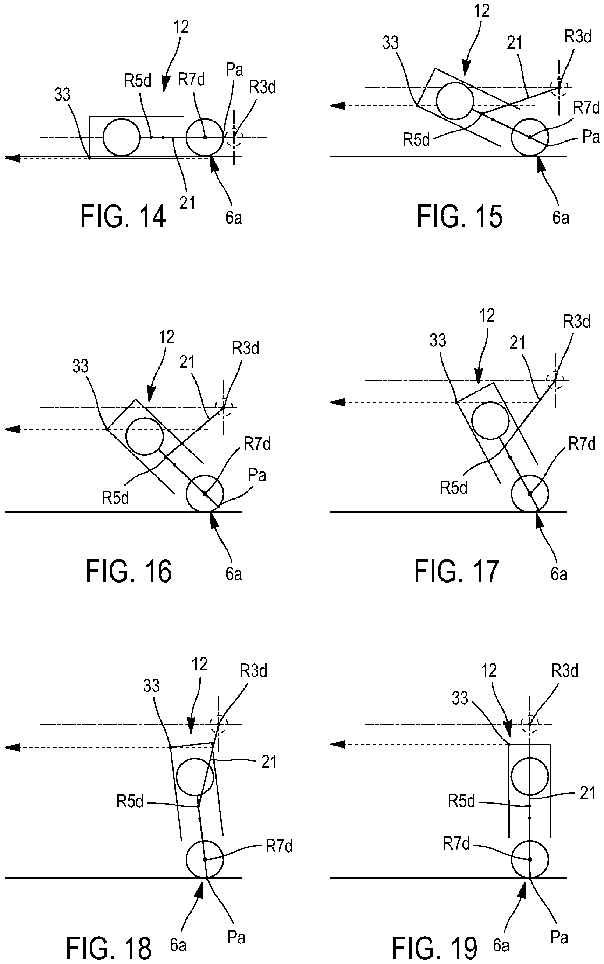

On pourra suivre sur les figures 14 à 19 l'évolution des trajectoires respectives des premier R3d et deuxième R5d axes de rotation de la biellette 21, du point de déplacement linéaire 33 du support de roues 12 ainsi que de l'axe de pivotement R7d de la roue 6d, du point de contact Pa entre la roue 6d et le sol lorsque la roue est dans sa position déployée de fonctionnement et du premier axe de rotation R3d de la biellette 21.

Plus particulièrement, le point de déplacement linéaire 33 du support de roues 12 passe d'une première position située vers l'intérieur du chariot lorsque la roue 6a est dans une position repliée sous le chariot (figure 14) à une deuxième position situé vers l'extérieur du chariot proche du premier axe de rotation R3d de la biellette 21 lorsque la roue 6a est dans une position déployée de fonctionnement (figure 19).

Ces deux positions sont représentées comme étant situées sur une même droite, c'est la raison pour laquelle on parle de déplacement linéaire. Mais de façon plus précise, cette trajectoire ne sera pas forcément strictement linéaire non plus la trajectoire verticale du premier axe de rotation R3d de la biellette 21 du fait de l'épaisseur et de la géométrie du profil de la roue 6a. Ces écarts à la linéarité sont très faibles, de l'ordre de plus ou moins un centimètre, de sorte que la référence à un guidage et un déplacement linéaire englobera ces divergences.

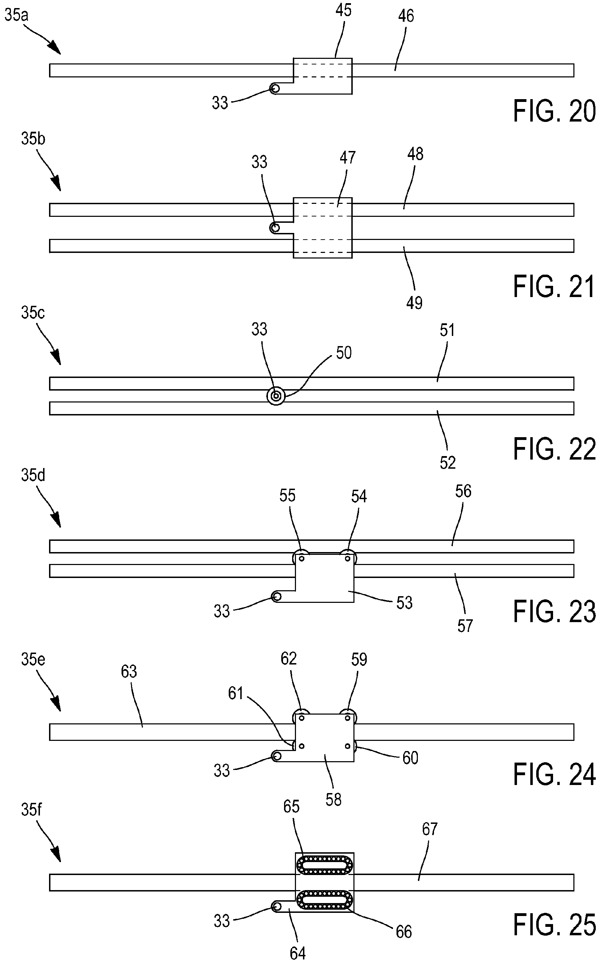

En référence aux figures 20 à 25, le système de guidage linéaire du point de déplacement linéaire 33 du support de roues monté sur la paroi d'un bord transversal pourra prendre par exemple les formes suivantes.

En référence à la figure 20, le système de guidage linéaire 35a comporte un coulisseau simple 45 sur un rail unique 46.

En référence à la figure 21, le système de guidage linéaire 35b comporte un coulisseau 47 sur deux rails parallèles 48,49.

En référence à la figure 22, le système de guidage linéaire 35c comporte un galet unique 50 emprisonné entre deux rails parallèles 51,52.

En référence à la figure 23, le système de guidage linéaire 35d comporte un coulisseau 53 à deux galets 54,55 emprisonnés entre deux rails parallèles 56,57.

En référence à la figure 24, le système de guidage linéaire 35e comporte un coulisseau 58 à quatre galets 59, 60, 61, 62 emprisonnant un rail unique 63.

Enfin, en référence à la figure 25, le système de guidage linéaire 35f comporte un coulisseau 64 à deux chemins de billes 65,66 emprisonnant un rail unique 67.

Le dispositif de l'invention peut être verrouillé et déverrouillé manuellement par l'utilisateur. Il peut être également prévu un système automatique de verrouillage de déverrouillage. On citera par exemple un pignon à renvoi d'angle actionné par un levier qui peut être la barre de manoeuvre du chariot ou un engrenage de deux quarts de roues dentées. Ces deux systèmes sont bien connus de l'homme du métier.

Les supports de roues peuvent être associés à une seule roue, il sera alors dans ce cas prévu un système de pliage de roues par roue.

Par ailleurs, les supports de roues peuvent prendre toute forme assurant le pliage et le déploiement des roues et les maintenant fixes dans la direction d'avancement du chariot. Notamment, on pourra prévoir un support de roues largement évidé afin de diminuer le poids du chariot.

Enfin, la description a été principalement détaillée pour le passage des roues d'une position repliée sous le chariot à une position déployée de fonctionnement ; cette description s'applique mutandis au passage inverse des roues de la position déployée de fonctionnement à la position repliée sous le chariot.

## Revendications

1. Chariot d'embarquement de charge muni d'au moins une roue avant et une roue arrière, le nombre total de roues et leur configuration permettant d'assurer le transport de charge, et comportant un dispositif de pliage de roues comportant au moins un support de roues (11,12) associé à au moins une roue (6,7,8,9) et solidarisé au dit chariot, et des moyens (20,21,22,23,35,35a,35b,35c,35d,35e,35f) de passage des roues (6,7,8,9) d'une position déployée de fonctionnement à une position repliée sous le chariot et vice versa, ledit dispositif comprenant en outre :
- des moyens (20,21,22,23) conférant un mouvement principalement de pivotement des roues (6,7,8,9) autour d'un axe de pivotement (R6,R7) situé au niveau de l'extrémité inférieure respective (38,39) des roues (6,7,8,9) considérées en position déployée de fonctionnement, et
- des moyens de déplacement linéaire (35) d'un point de déplacement linéaire (32,33) du support de roues (11,12) entre la position de ce point de déplacement (32,33) lorsque les roues (6,7,8,9) sont en position repliée sous le chariot jusqu'à la position de ce même point de déplacement (32,33) lorsque les roues (6,7,8,9) sont en position déployée de fonctionnement, et vice versa,
ces moyens de pivotement (20,21,22,23) et de déplacement linéaire (35,35a,35b,35c,35d,35e,35f) assurant de façon concomitante le mouvement principalement de pivotement des roues (6,7,8,9) et le déplacement linéaire du point de déplacement linéaire (32,33) du support de roues (11,12), **caractérisé en ce que** ledit dispositif de pliage de roues comporte au moins une biellette (20,21,22,23) par support de roues (11,12) dont la première extrémité (24,25) est solidaire du chariot et monté rotatif relativement à ce chariot autour d'un premier axe de rotation (R2,R3), et dont la deuxième extrémité (26,27) est solidaire de l'une au moins des roues (6,7,8,9) et est monté rotatif relativement à la dite roue (6,7,8,9) autour d'un deuxième axe de rotation (R4,R5), et **en ce que** la deuxième extrémité (26,27) des biellettes (20,21,22,23) est montée rotatif relativement au support de roues (11,12) solidarisé à au moins une roue (6,7,8,9) en liaison avec la biellette correspondante (20,21,22,23), et est située dans le plan de rotation (B) de la roue (6,7,8,9) considérée dans sa position déployée de fonctionnement.

2. Chariot selon la revendication 1, **caractérisé en ce qu'**il comporte des moyens de maintien (20,21,22,23,35,35a,35b,35c,35d,35e,35f) d'au moins un point de contact (P) des roues (6,7,8,9) avec le sol au cours du passage des roues (6,7,8,9) d'une position repliée sous le chariot à une position déployée de fonctionnement, et vice versa.

3. Chariot selon l'une quelconque des revendications 1 ou 2, **caractérisé en ce que** la première extrémité (24,25) des biellettes (20,21,22,23) est située vers l'extérieur du chariot relativement aux roues (6,7,8,9) considérées dans leur position repliée sous le chariot.

4. Chariot selon l'une quelconque des revendications précédentes, **caractérisé en ce que** les moyens de déplacement linéaire (35, 35a,35b,35c,35d,35e,35f) du point de déplacement linéaire (32,33) du support de roues associé (11,12) assurent un déplacement linéaire de ce point de déplacement linéaire (32,33) parallèlement au sol, et **en ce que** le point de déplacement linéaire (32,33) du support de roues associé (11,12) est situé au niveau de l'extrémité supérieur (30,31) du dit support de roues (11,12) considéré lorsque la roue correspondante (6,7,8,9) est en position déployée de fonctionnement.

5. Chariot selon la revendication 4, **caractérisé en ce que** le point de déplacement linéaire (32,33) du support de roues associé (11,12) est décalé d'une part verticalement vers le sol de l'axe (A) parallèle au sol passant par le premier axe de rotation (R3,R4) de la biellette correspondante (21,22), et d'autre part horizontalement vers l'intérieur du chariot du plan de rotation (B) de la roue correspondante (6,7,8,9) lorsque la dite roue (6,7,8,9) est considérée dans une position autre que la position repliée sous le chariot.

6. Chariot selon l'une quelconque des revendications précédentes, **caractérisé en ce que** les moyens de déplacement linéaire du point de déplacement linéaire (32,33) du support de roues associé (11,12) comportent au moins un rail de guidage (35,46,48,49,51,52,56,57,63,67) réalisé sur le chariot et des moyens de guidages associés (45,47,50,53,54,55,58,59,60,61,62,64,65,66).

7. Chariot selon l'une quelconque des revendications précédentes, **caractérisé en ce qu'**au moins une roue (6a,7a,8a,9a) du chariot est une roue omnidirectionnelle à galets (6a,7a,8a,9a) pour laquelle la bande de roulement (38) comporte au moins une rangée (39,40) de rouleaux (41) dont l'axe de rotation (R8) est dans le plan de rotation (B) de la dite roue (6a,7a,8a,9a).

## Patentansprüche

1. Wagen für eine Ladung, der mit mindestens einem Vorderrad und einem Hinterrad versehen ist, wobei die Gesamtanzahl von Rädern und ihre Konfiguration, die es erlauben, den Ladungstransport sicherzustellen, und eine Faltvorrichtung von Rädern umfasst, die mindestens einen Radträger (11, 12) umfasst, der mit mindestens einem Rad (6, 7, 8, 9) assoziiert und fest mit dem Wagen verbunden ist, und Mittel (20, 21, 22, 43, 35, 35a, 35b, 35c, 35d, 35e, 35f) zum Übergehen der Räder (6, 7, 8, 9) von einer aufgefalteten Betriebsposition zu einer unter dem Wagen zurückgefalteten Position, wobei die Vorrichtung außerdem Folgendes umfasst:
- Mittel (20, 21, 22, 23), die eine in der Hauptsache schwenkende Bewegung der Räder (6, 7, 8, 9) um eine Schwenkachse (R6, R7) verleihen, die im Bereich des jeweiligen unteren Endes (38, 39) der Räder (6, 7, 8, 9), die in aufgefalteter Betriebsposition betrachtet werden, liegt, und
- Mittel zum linearen Verlagen (35) eines linearen Verlagerungspunkts (32, 33) des Radträgers (11, 12) zwischen der Position dieses Verlagerungspunkts (32, 33), wenn die Räder (6, 7, 8, 9) in unter den Wagen zurückgefalteten Position sind, bis zu der Position desselben Verlagerungspunkts (32, 33), wenn die Räder (6, 7, 8, 9) in aufgefalteter Betriebsposition sind und umgekehrt,
wobei diese Mittel zum Schwenken (20, 21, 22, 23) und zur linearen Verlagerung (35, 35a, 35b, 35c, 35d, 35e, 35f) gleichzeitig die Hauptschwenkbewegung der Räder (6, 7, 8, 9) und der linearen Verlagerung des linearen Verlagerungspunkts (32, 33) des Radträgers (11, 12) sicherstellen, **dadurch gekennzeichnet, dass** die Radfaltvorrichtung mindestens einen Schwingarm (20, 21, 22, 23) pro Radträger (11, 12) umfasst, dessen erstes Ende (24, 25) fest mit dem Wagen verbunden und in Bezug zu diesem Wagen um eine erste Rotationsachse (R2, R3) drehend montiert ist, und dessen zweites Ende (26, 27) fest mit mindestens einem der Räder (6, 7, 8, 9) verbunden und in Bezug zu dem Rad (6, 7, 8, 9) um eine zweite Rotationsachse (R4, R5) drehend montiert ist, und dass das zweite Ende (26, 27) der Schwingarme (20, 21, 22, 23) in Bezug zu dem Radträger (11, 12), der mit mindestens einem Rad (6, 7, 8, 9) in Verbindung mit dem entsprechenden Schwingarm (20, 21, 42, 23) fest verbunden ist, drehbar montiert ist und in der Rotationsebene (B) des betreffenden Rads (6, 7, 8, 9) in seiner aufgefalteten Betriebsposition betrachtet liegt.

2. Wagen nach Anspruch 1, **dadurch gekennzeichnet, dass** er Haltemittel (20, 21, 22, 43, 35, 35a, 35b, 35c, 35d, 35e, 35f) mindestens eines Berührungspunkts (P) der Räder (6, 7, 8, 9) mit dem Boden im Laufe des Übergehens der Räder (6, 7, 8, 9) von einer unter den Wagen zurückgefalteten Position zu einer aufgefalteten Betriebsposition und umgekehrt umfasst.

3. Wagen nach einem der Ansprüche 1 oder 2, **dadurch gekennzeichnet, dass** das erste Ende (24, 25) der Schwingarme (20, 21, 22, 23) nach außerhalb des Wagens in Bezug zu den Rädern (6, 7, 8, 9) in ihrer unter den Wagen zurückgefalteten Position betrachtet liegt.

4. Wagen nach einem der vorhergehenden Ansprüche, **dadurch gekennzeichnet, dass** die Mittel zur linearen Verlagerung (35, 35a, 35b, 35c, 35d, 35e, 35f) des linearen Verlagerungspunkts (32, 33) des assoziierten Radträgers (11, 12) eine lineare Verlagerung dieses linearen Verlagerungspunkts (32, 33) parallel zu dem Boden sicherstellen, und dass der lineare Verlagerungspunkt (32, 33) des assoziierten Radträgers (11, 12) im Bereich des oberen Endes (30, 31) des betreffenden Radträgers (11, 12) liegt, wenn das entsprechende Rad (6, 7, 8, 9) in aufgefalteter Betriebsposition betrachtet ist.

5. Wagen nach Anspruch 4, **dadurch gekennzeichnet, dass** der lineare Verlagerungspunkt (32, 33) des assoziierten Radträgers (11, 12) einerseits vertikal zu dem Boden der Achse (A) parallel zu dem Boden, durch die erste Rotationsachse (R3, R4) des entsprechenden Schwingarms (21, 22) durchgehend versetzt ist, und andererseits horizontal zum Inneren des Wagens der Rotationsebene (B) des entsprechenden Rads (6, 7, 8, 9), wenn das Rad (6, 7, 8, 9) in einer anderen Position als der unter den Wagen zurückgefalteten Position betrachtet wird.

6. Wagen nach einem der vorhergehenden Ansprüche, **dadurch gekennzeichnet, dass** die Mittel zur linearen Verlagerung des linearen Verlagerungspunkts (32, 33) des assoziierten Radträgers (11, 12) mindestens eine Führungsschiene (35, 35a, 35b, 35c, 35d, 35e, 35f), die auf dem Wagen hergestellt ist, und assoziierte Führungsmittel (45, 47, 50, 53, 54, 55, 58, 59, 60, 61, 62, 64, 65, 66), umfassen.

7. Wagen nach einem der vorhergehenden Ansprüche, **dadurch gekennzeichnet, dass** mindestens ein Rad (6a, 7a, 8a, 9a) des Wagens ein Allrichtungsrad mit Walzen (6a, 7a, 8a, 9a) ist, für das die Lauffläche (38) mindestens eine Reihe (39, 40) von Walzen (41) umfasst, deren Rotationsachse (R8) in der Rotationsebene (B) des Rads (6a, 7a, 8a, 9a) liegt.

## Claims

1. A carriage for loading freight provided with at least one front wheel and a rear wheel, the total number of wheels and their configuration allowing the transporting of freight to be carried out, and comprising a wheel folding device comprising at least one wheel support (11, 12) associated with at least one wheel (6, 7, 8, 9) and secured to said carriage, and means (20, 21, 22, 23, 35, 35a, 35b, 35c, 35d, 35e, 35f) for passing the wheels (6, 7, 8, 9) from a functional deployed position into a position folded under the carriage and vice versa, said device further including:
- means (20, 21, 22, 23) conferring a principally pivoting movement of the wheels (6, 7, 8, 9) about a pivot axis (R6, R7) situated at the level of the respective lower end (38, 39) of the wheels (6, 7, 8, 9) concerned in functional deployed position, and
- means for linear displacement (35) of a linear displacement point (32, 33) of the wheel support (11, 12) between the position of this displacement point (32, 33) when the wheels (6, 7, 8, 9) are in folded position under the carriage up to the position of this same displacement point (32, 33) when the wheels (6, 7, 8, 9) are in functional deployed position, and vice versa,
these pivoting means (20, 21, 22, 23) and linear displacement means (35, 35a, 35b, 35c, 35d, 35e, 35f) ensuring in a simultaneous manner the principally pivoting movement of the wheels (6, 7, 8, 9) and the linear displacement of the linear displacement point (32, 33) of the wheel support (11, 12), **characterized in that** said wheel folding device comprises at least one connecting rod (20, 21, 22, 23) per wheel support (11, 12), the first end (24, 25) of which is integral with the carriage and is rotatably mounted relative to this carriage about a first rotation axis (R2, R3), and the second end (26, 27) of which is integral with at least one of the wheels (6, 7, 8, 9) and is rotatably mounted relative to said wheel (6, 7, 8, 9) about a second rotation axis (R4, R5), and **in that** the second end (26, 27) of the connecting rods (20, 21, 22, 23) is rotatably mounted relative to the wheel support (11, 12) secured to at least one wheel (6, 7, 8, 9) linked with the corresponding connecting rod (20, 21, 22, 23), and is situated in the plane of rotation (B) of the wheel (6, 7, 8, 9) concerned in its functional deployed position.

2. The carriage according to claim 1, **characterized in that** it comprises retention means (20, 21, 22, 23, 35, 35a, 35b, 35c, 35d, 35e, 35f) of at least one contact point (P) of the wheels (6, 7, 8, 9) with the ground during the passage of the wheels (6, 7, 8, 9) from a folded position under the carriage to a functional deployed position, and vice versa.

3. The carriage according to any one of claims 1 or 2, **characterized in that** the first end (24, 25) of the connecting rods (20, 21, 22, 23) is situated towards the exterior of the carriage relative to the wheels (6, 7, 8, 9) concerned in their folded position under the carriage.

4. The carriage according to any one of the preceding claims, **characterized in that** the means for linear displacement (35, 35a, 35b, 35c, 35d, 35e, 35f) of the linear displacement point (32, 33) of the associated wheel support (11, 12) ensure a linear displacement of this linear displacement point (32, 33) parallel to the ground, and **in that** the linear displacement point (32, 33) of the associated wheel support (11, 12) is situated at the level of the upper end (30, 31) of said wheel support (11, 12) concerned when the corresponding wheel (6, 7, 8, 9) is in functional deployed position.

5. The carriage according to claim 4, **characterized in that** the linear displacement point (32, 33) of the associated wheel support (11, 12) is offset on the one hand vertically towards the ground from the axis (A) parallel to the ground passing through the first rotation axis (R3, R4) of the corresponding connecting rod (21, 22), and on the other hand horizontally towards the interior of the carriage from the plane of rotation (B) of the corresponding wheel (6, 7, 8, 9) when said wheel (6, 7, 8, 9) is considered in a position other than the folded position under the carriage.

6. The carriage according to any one of the preceding claims, **characterized in that** the linear displacement means of the linear displacement point (32, 33) of the associated wheel support (11, 12) comprise at least one guide rail (35, 46, 48, 49, 51, 52, 56, 57, 63, 67) formed on the carriage and associated guide means (45, 47, 50, 53, 54, 55, 58, 59, 60, 61, 62, 64, 65, 66) .

7. The carriage according to any one of the preceding claims, **characterized in that** at least one wheel (6a, 7a, 8a, 9a) of the carriage is an omnidirectional wheel with runners (6a, 7a, 8a, 9a) for which the tread (38) comprises at least one row (39, 40) of rollers (41), the rotation axis (R8) of which is in the plane of rotation (B) of said wheel (6a, 7a, 8a, 9a) .
